# EUROPÄISCHE PATENTSCHRIFT

(11) **EP 0 877 262 B1**
(45) Veröffentlichungstag und Bekanntmachung des Hinweises auf die Patenterteilung: **11.08.2004**
(21) Anmeldenummer: 98106900.8
(22) Anmeldetag: 15.04.1998
(51) Int. Cl.: G01V 1/20, G10K 11/00

(54) **Schleppkörper für Sonarsystem**
Towed device for sonar system
Corps remorqué pour système sonar

(30) Priorität: 07.05.1997 DE 19719306
(43) Veröffentlichungstag der Anmeldung: 11.11.1998
(73) Patentinhaber: ATLAS ELEKTRONIK GmbH, 28305 Bremen (DE)
(72) Erfinder: Bauer, Wilhelm, 27711 Osterholz-Scharmbeck (DE); Kristann, Andreas, 28213 Bremen (DE); Licht, Joachim, 28201 Bremen (DE)

(56) Entgegenhaltungen:
- EP-A- 0 193 215
- DE-A- 4 140 201
- FR-A- 2 735 645
- US-A- 5 253 605
- US-A- 5 561 640

## Beschreibung

Die Erfindung betrifft einen Schleppkörper für ein im Wasser geschlepptes, einen akustischen Sendeteil mit Sendeantenne und einen akustischen Empfangsteil mit Empfangsantenne aufweisendes Sonarsystem der im Oberbegriff des Anspruchs 1 definierten Gattung.

Schleppkörper für im wasser geschleppte Sonarsysteme sind zum Beispiel aus FR-A-2 735 645 und EP-A-0 193 215 bekannt.

Ein weiterer bekannter Schleppkörper dieser Art (Underwater updates, Navy International, Mai/Juni 1993, Seite 140 + 141) ist als ein den akustischen Sender aufnehmender Hohlzylinder mit elliptischem oder tropfenförmigem Querschnitt ausgebildet, der an der Rückseite seines in Schlepplage oberen, hinteren Endes zwei zueinander in einem stumpfen Winkel seitlich von dem Hohlzylinder wegstrebende Flügel zur Stabilisierung seiner Schlepplage mit vertikal ausgerichteter Zylinderachse trägt. Etwa mittig am Hohlzylinder ist eine Gabel durch zwei diametral angeordnete radiale Bolzen schwenkbeweglich festgelegt, die mit dem Schlepp- oder Zugkabel zum Schleppfahrzeug, auch Schlepptrosse genannt, verbunden ist. Etwa in gleicher Höhe mit den radialen Bolzen ist an der Rückseite des Hohlzylinders, an der auch die Stabilisierungsflügel vorstehen, der die akustische Empfangsantenne enthaltende Schleppstrang befestigt. Der Schleppkörper hat ein relativ großes Gewicht, um die geforderte Schlepptiefe zu erreichen.

Zum Ausbringen und Einholen des Sonarsystems vom Schleppfahrzeug aus, ist an Bord des Schleppfahrzeugs eine Verbringeinrichtung, das sog. Handling-System, vorhanden, die eine Winde mit einer Windentrommel für das Zugkabel und einer Windentrommel für den Schleppstrang, sowie eine Versatzvorrichtung für Schleppkörper und Schleppstrang aufweist, die den Schleppkörper mit daran nach dessen vorherigem Ausbringen befestigtem Schleppstrang ins Wasser einsetzt und umgekehrt im Wasser selbstätig aufnimmt und an Bord des Schleppfahrzeug hebt. Das Ausbringen und Einholen des Schleppstrangs erfolgt getrennt von dem Schleppkörper vor dessen Ausbringen bzw. nach dessen Einholen, wobei der Schleppstrang über eine Führung am Heck, dem sogenannten Fairlead, ins Wasser abgelassen bzw. aus dem Wasser aufgezogen wird.

Insbesondere bei kleinen Schiffen, wie Corvetten, bereitet die Unterbringung des Sonarsystems mit Schleppkörper, Schleppstrang und Verbringeinrichtung an Deck des Schiffes nicht geringe Raumprobleme, so daß der Bewegungsraum für die Bediener beim Ausbringen und Einholen des Sonarsystems recht beengt ist und zudem noch gefährlich nahe am Heckende liegt. Insbesondere das An- und Abkoppeln des Schleppstrangs an den Schleppkörper muß in extremer Position an der Heckkante vorgenommen werden, was bei starkem Seegang ein erhebliches Gefährdungspotential für den oder die Bediener darstellt.

Der Erfindung liegt die Aufgabe zugrunde, einen Schleppkörper der eingangs genannten Art zu schaffen, der die Handhabung, das sogenannte Handling, des Sonarsystems beim Ausbringen und Einholen mittels der Verbringeinrichtung wesentlich verbessert, insbesondere den Bedienenden dabei mehr und damit sicheren Bewegungsraum am Heck des Schleppfahrzeugs verschafft.

Die Aufgabe ist bei einem Schleppkörper der im Oberbegriff des Anspruchs 1 angegebenen Gattung, erfindungsgemäß durch die Merkmale im Kennzeichenteil des Anspruch 1 gelöst.

Der erfindungsgemäße Schleppkörper hat den Vorteil, daß durch seine Zweiteiligkeit nicht nur Rumpf und Heckteil getrennt an Deck verstaut und damit auf kleinstem Raum untergebracht werden können, sondern vor allem in der Ausbring- und Einholposition des in der Schleppkörper-Versatzvorrichtung aufgenommenen Rumpfes selbst bei beengten Raumverhältnissen noch genügend Platz zwischen dem Rumpf und der Heckkante vorhanden ist, so daß die Bedienungsperson bequem den bereits ausgebrachten Schleppstrang mit dem Rumpf verbinden bzw. umgekehrt den Schleppstrang vom Rumpf lösen und mit der Windentrommel koppeln kann und dabei eine selbst bei schwerem Seegang ungefährdete Arbeitsposition einnimmt. Neben der erfindungsgemäßen Zweiteiligkeit des Schleppkörpers sind hierzu noch zusätzlich die Befestigungsvorrichtungen für den mechanischen und elektrischen Anschluß einerseits des Zugkabels zum Schleppfahrzeug und andererseits des Schleppstrangs am Schleppkörper am Rumpf angeordnet und der Schleppstrang von einer Gleitführung im Heckteil umschlossen. Aufgrund dieser Gleitführung im Heckteil ist es möglich, das Heckteil mit einer entsprechenden Haltevorrichtung problemlos über das Heck hinauszuschwenken, um beim An- und Abkoppeln des Schleppstrangs an bzw. von dem Rumpf, bei welchem das Heckteil weitgehend mit dem Rumpf fluchten muß, genügend Montageplatz für den Bedienenden zu gewinnen.

Die im Heckteil ausgebildete Gleitführung für den Schleppstrang ermöglicht es außerdem, das Heckteil als Führungsteil, dem sogenannten Fairlead, beim Fieren und Einholen des Schleppstrangs zu verwenden, um diesen ohne Beschädigungen über die Heckkante des Schleppfahrzeuges laufen zu lassen, wobei das Heckteil seitwärts vom Schleppkörper am Heck festgelegt wird. Damit spart man ein gesondertes Fairlead ein und neben Platzgewinn kann eine Kostenreduzierung für die Verbringeinrichtung des Sonarsystems erzielt werden.

Zweckmäßige Ausführungsformen des erfindungsgemäßen Schleppkörpers mit vorteilhaften Weiterbildungen und Ausgestaltungen der Erfindung ergeben sich aus den weiteren Anprüchen.

Gemäß einer bevorzugten Ausführungsform der Erfindung ist das Heckteil an den in Schlepplage oberen Ende der Rückseite des im wesentlichen turmartigen Rumpfes mit zur Rumpfachse rechtwinkliger Heckteilachse angesetzt, wobei das Heckteil einen im wesentlichen zylinderförmigen Tubus aufweist, von dem zwei die Stabilsatoren bildende Flügel radial abstehen und in dem die Gleitführung ausgebildet ist. Dadurch wird eine sehr stabile Schwimmlage des Schwimmkörpers beim Schleppen und eine gute Stabilisierung der rundum sendenden Sendeantenne in Vertikalrichtung erreicht, so daß durch mehrere übereinander angeordnete Sendewandler eine ausreichend gute Bündelung des Sendestrahls in Vertikalrichtung möglich ist.

Gemäß einer vorteilhaften Ausführungsform der Erfindung ist die Befestigungsvorrichtung für das Zugkabel auf der Oberseite des Rumpfes angeordnet und an dem in Schlepplage unteren Ende des Rumpfes sind seitlich abstehende Depressoren zur Einstellung der Schlepptiefe vorhanden.

Mittels der Depressoren wird beim Schleppen ein dynamischer Abtrieb erzeugt, der eine annähernd konstante Lauftiefe des Schleppkörpers und damit des Schleppstrangs bei unterschiedlichen Schleppgeschwingkeiten sicherstellt. Der dynamische Abtrieb ermöglicht gleichzeitig eine wesentliche Gewichtsreduzierung des Schleppkörpers, da dessen Lauftiefe nun nicht mehr durch das Gewicht des Schleppkörpers erreicht werden muß. Ein geringeres Schleppkörpergewicht erleichtert dessen Handling beim Ein- und Ausbringen und stellt auch geringere Anforderungen an die Stabilität der Versatzvorrichtung. Zusätzlich kann die Länge des Zugkabels verkürzt werden, da infolge des dynamischen Abtriebs die Schleppkurve des Zugkabels steiler verläuft. Ein kürzeres Zugkabel bedeutet ein geringeres Gewicht und eine kleinere Windentrommel, so daß insoweit Größe und Gewicht der Verbringeinrichtung reduziert werden kann und zusätzliche Einsparungen erzielt werden.

Gemäß einer bevorzugten Ausführungsform der Erfindung weist eine Verbringeinrichtung zum Ausbringen und Einholen eines im Wasser geschleppten Sonarsytems von einem Schleppfahrzeug aus neben der vorzugsweisen hydraulisch betätigten Versatzvorrichtung für den erfindungsgemäßen Schleppkörper eine Haltevorrichtung für das Heckteil auf, mittels derer das Heckteil an den Rumpf zur Verbindung mit dem Rumpf angeschwenkt oder nach Lösen vom Rumpf vom Rumpf abgeschwenkt und als Fairlead für den Schleppstrang seitwärts des Rumpfes festgelegt werden kann.

Die Erfindung ist anhand eines in der Zeichnung dargestellten Ausführungsbeispiels im folgenden näher beschrieben. Es zeigen:
- Fig. 1: eine Seitenansicht eines geschleppten Sonarsystems (ausschnittweise) und einer an Deck eines Schleppfahrzeugs angeordneten Verbringeinrichtung für das Sonarsystem,
- Fig. 2: eine perspektivische Darstellung der Verbringeinrichtung in Fig. 1,
- Fig. 3: eine perspektivische Darstellung eines Schleppkörpers des Sonarsystems in Fig. 1,
- Fig. 4: eine Seitenansicht eines Heckteils des Schleppkörpers in Fig. 3, teilweise geschnitten,
- Fig. 5: eine Ansicht des Heckteils in Richtung Pfeil V in Fig. 4,
- Fig. 6: eine vergrößerte perspektivische Darstellung einer Befestigungsvorrichtung für einen Schleppstrang des Sonarsystems am Rumpf des Schleppkörpers gemäß Fig. 3,
- Fig. 7: eine Seitenansicht einer Haltevorrichtung der Verbringeinrichtung in Fig. 1 und 2 mit aufgenommenem, vom Rumpf getrennten Heckteil des Schleppkörpers.

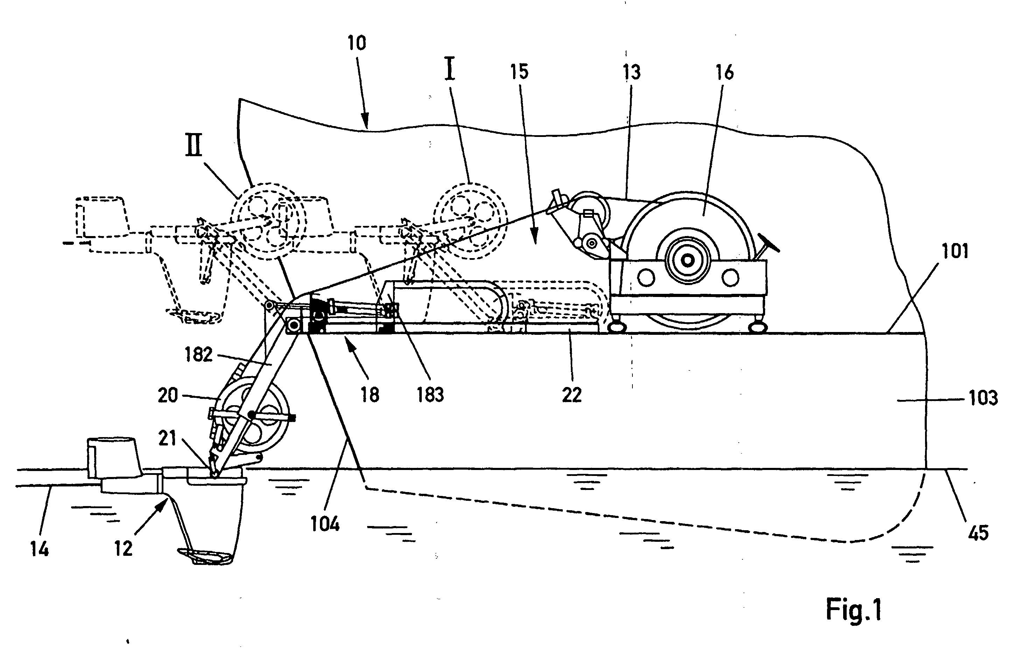

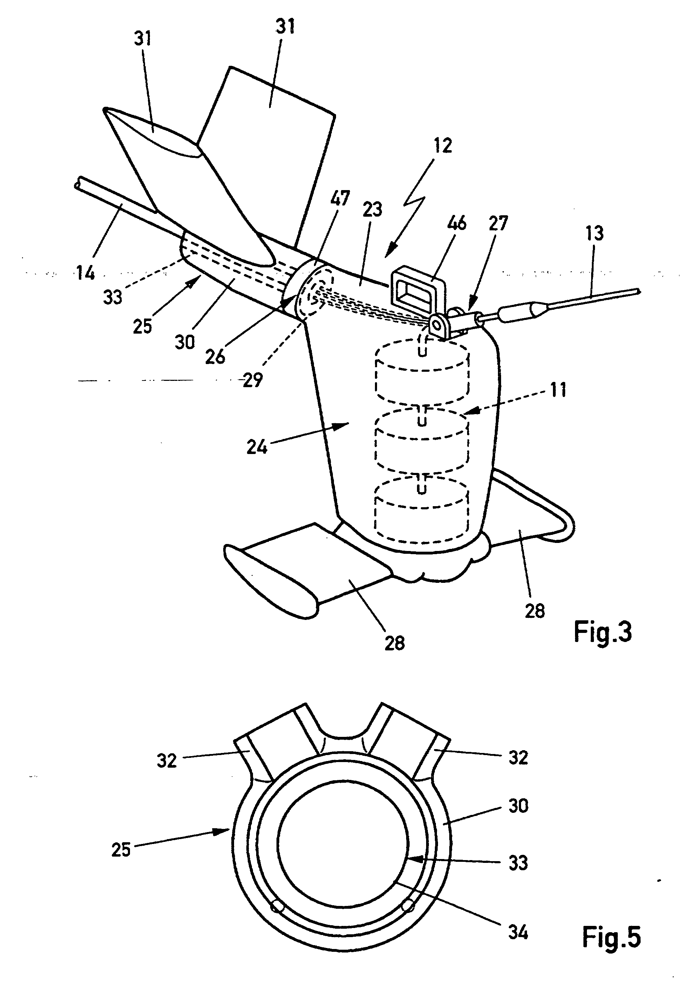

Das in Fig. 1 ausschnittsweise während des Ausbringvorgangs dargestellte Sonarsystem, das von einem Schleppfahrzeug 10 im Wasser geschleppt wird, weist in bekannter Weise einen akustischen Sendeteil mit einer Sendeantenne und einen akustischen Empfangsteil mit Empfangsantenne auf. Von dem akustischen Sendeteil ist mindestens die Sendeantenne 11 (Fig. 3) in einem Schleppkörper 12 untergebracht, der an einem Schlepp- oder Zugkabel 13, das am Schleppfahrzeug 10 befestigt ist, von dem Schleppfahrzeug 10 gezogen wird, wobei er im Wasser eine im wesentlichen konstante und von der Schleppgeschwindigkeit unabhängige Tauchtiefe einnimmt. Am Schleppkörper 12 ist ein in Fig.1 nur abschnittsweise dargestellter Schleppstrang 14 befestigt, in dem mindestens die Empfangsantenne des akustischen Empfangsteils, das sogenannte Hydrophonarray, das ist eine Vielzahl von äquidistant hintereinander angeordneten Hydrophonen, aufgenommen ist. Neben dem eigentlichen Hydrophonarray, also der Empfangsantenne, sind im Schleppstrang 14 noch Zugkabel, Dämpfungsmodule und Stabilisierungselemente vorgesehen.

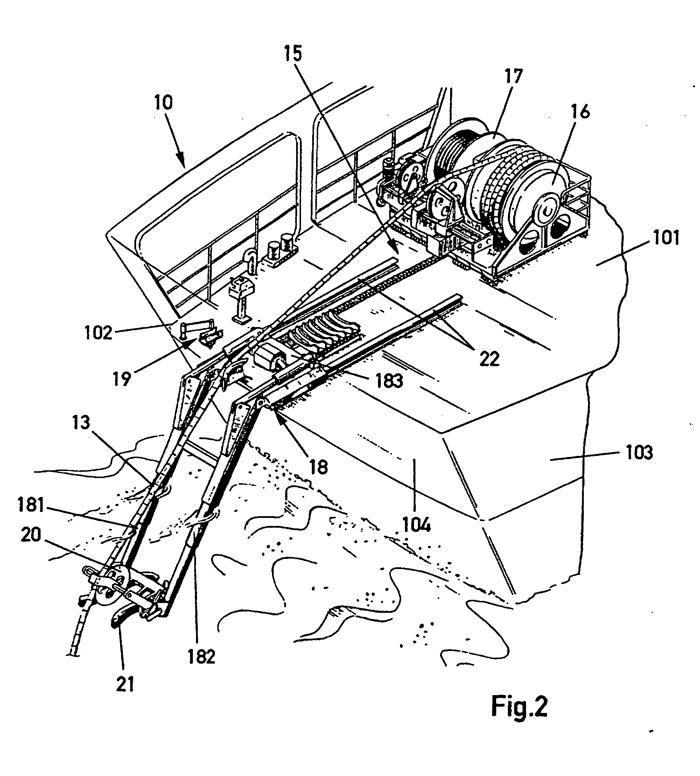

Zum Ein- und Ausbringen des geschleppten Sonarsystems ist auf Deck des Schleppfahrzeugs in dessen Heck eine Verbringeinrichtung 15, auch Handling-System genannt, installiert. In Fig. 1 und 2 sind bei dem dort dargestellten Heck des Schleppfahrzeugs 10 mit 101 das Deck mit 102 und 103 die Bordwände und mit 104 die Heckwand bezeichnet. Die Verbringeinrichtung 15 umfaßt eine Motorwinde mit einer Windentrommel 16 für das Zugkabel 13 einer Windentrommel 17 für den Schleppstrang 14, eine hydraulische Versatzvorrichtung 18 für den Schleppkörper 12, sowie eine seitlich der Versatzvorrichtung 18 angeordnete Haltevorrichtung 19 für einen Teil des Schleppkörpers 12, auf die noch näher eingegangen wird. Wie aus Fig. 1 und 2 ersichtlich ist, weist die Versatzvorrichtung 18 zwei parallel geführte teleskopierbare Schwenkarme 181, 182 auf, an deren freien Ende einerseits eine Laufrolle 20 für das Zugkabel 13 und andererseits eine schließ- und lösbare Aufnahmeeinheit 21 für den Schleppkörper 12 angeordnet sind. Die Schwenkarme 181, 182 der Versatzvorrichtung 18 sind an einem Schlitten 183 befestigt, der auf an Deck 101 in Schleppfahrzeuglängachse verlegten Schienen 22 verschiebbar ist.

Der Schleppkörper 12 des geschleppten Sonarsystems ist in Fig. 3 perspektivisch dargestellt. Er ist als Hohlkörper 23 ausgebildet und in einen turmartigen Rumpf 24 und ein schwanzartiges Heckteil 25 unterteilt. Rumpf 24 und Heckteil 25 sind mittels einer Schnellverriegelung 26 lösbar miteinander verbunden. Das Heckteil 25 ist dabei an der Rückseite des Rumpfes 24, und zwar an dem in Schwimmlage oberen Ende des Rumpfes 24, angesetzt, wobei sich die Heckteilachse rechtwinklig zur Rumpfachse erstreckt. In dem hohlen Rumpf 24 ist die Sendeantenne 11 sowie eine hier nicht weiter dargestellte Elektronikbox des akustischen Sendeteils aufgenommen. Der Rumpf 24 trägt auf seiner Oberseite eine Befestigungsvorrichtung 27 für das Zugkabel 13, an der sowohl die mechanische Befestigung des Zugkabels 13 als auch die elektrische Verbindung zu den im Inneren des Zugkabels 13 verlaufenden elektrischen Leitern vorgenommen ist, sowie ein Aufnahmeglied 46, das zum Einholen und Ausbringen des Schleppkörpers 12 mit der Aufnahmeeinheit 21 der Versatzvorrichtung 18 korrespondiert. An dem in Schlepplage unteren Ende des Rumpfes 24 sind Depressoren 28 angeordnet, die auf diametralen Seiten des Rumpfes 24 von diesem seitlich abstehen. Die Depressoren 28, die in Schlepprichtung gesehen einen tragflügelförmigen Querschnitt aufweisen, dienen zur Erzeugung eines dynamischen Abtriebs beim Schleppen des Schleppkörpers 12 zum Zwecke der Einstellung der Tauchtiefe des Schleppkörpers 12 und des Schleppstrangs 14 und damit der Sensoren (Sendeantenne, Empfangsantenne) des Sonarsystems. Die Depressoren 28 sind dabei so konstruiert, daß die gewünschte Tauchtiefe unabhängig von der Schleppgeschwindigkeit des Schleppfahrzeugs 10 konstant gehalten wird.

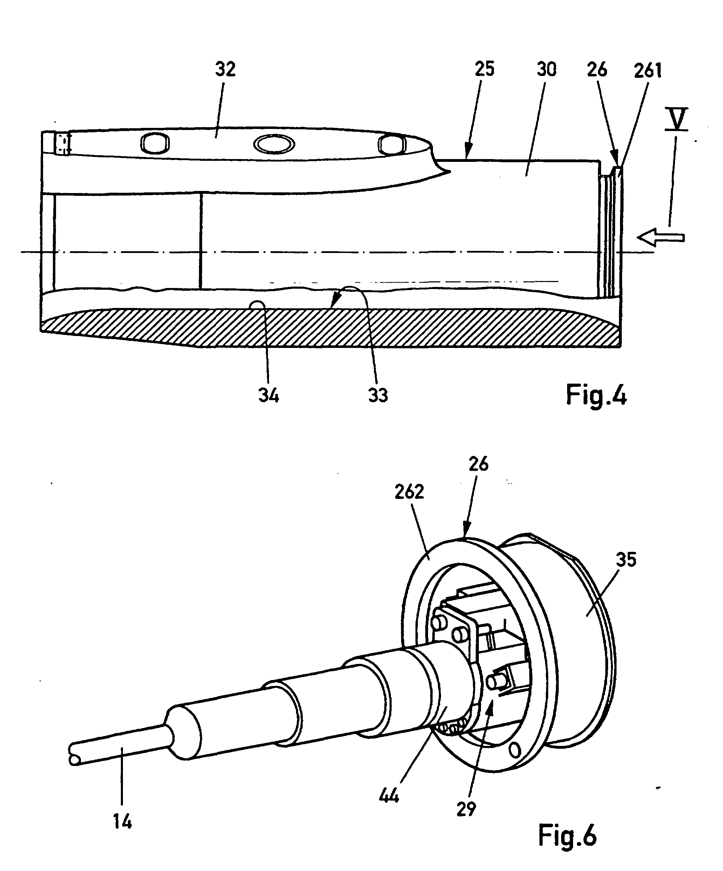

Am Rumpf 24, und zwar in der Schnittstelle zum Heckteil 25, ist eine weitere Befestigungsvorrichtung 29 für den Schleppstrang 14 vorgesehen. Diese Befestigungsvorrichtung 29 ist in Verbindung mit der Schnellverriegelung 26 zwischen Rumpf 24 und Heckteil 25 in Fig. 6 dargestellt und wird später noch eingehend beschrieben.

Das Heckteil 25 besteht aus einem im wesentlichen zylinderförmigen Tubus 30, von dem zwei Stabilisatoren für den Schwimmkörper 12 bildende Flügel 31 radial abstehen. Wie aus Fig. 4 und 5 ersichtlich ist, sind die beiden Flügel 31 jeweils auf einem auf der Oberseite des Tubus 30 ausgebildeten Montagestumpf 32 bündig aufgesetzt und mit diesem verschraubt. Die Montagestümpfe 32 sind dabei so angeordnet, daß die Flügel 31 symmetrisch zu einer in Schwimmlage vertikal durch die Heckteilachse verlaufenden Vertikalebene ausgerichtet sind und die Flügelachsen mit der Vertikalebene einen spitzen Winkel kleiner 45° einschließen. Im Innern des Tubus 30 ist eine Gleitführung 33 für den Schleppstrang 14 ausgebildet. Die Gleitführung 33 besteht aus einer im wesentlichen zylindrischen Bohrung 34, die zu beiden Stirnseiten des Tubus 33 hin konusförmig erweitert ist (Fig. 4). An dem dem Rumpf 24 zugekehrten Stirnende ist am Tubus 30 ein Verriegelungsflansch 261 angeformt, der den heckteilseitigen Teil der Schnellverriegelung 26 bildet. Einen gleichen Verriegelungsflansch 262 findet sich am Rumpf 24, und zwar an dessen Schnittstelle zum Heckteil 25. Dieser den rumpfseitigen Teil der Schnellverriegelung 26 bildende Verriegelungflansch 262 ist in Fig.6 zu sehen und am Stirnende einer in den Rumpf 24 eingesetzten Muffe 35 ausgebildet. Den dritten Teil der Schnellverriegelung 26 bildet ein Verschlußring 47 (Fig.3), üblicherweise Margrafring genannt, der die beiden aneinanderliegenden Verriegelungsflansche 261, 262 vom Rumpf 24 und Heckteil 25 übergreift und diese nach Zuziehen eines Spannhebels kraftschlüssig gegeneinander preßt.

Im Innern der Muffe 35 ist die Befestigungsvorrichtung 29 für den durch die Gleitführung 33 des Heckteils 25 hindurchgeführten Schleppstrang 14 angeordnet. In dieser Befestigungsvorrichtung 29 wird sowohl die mechanische Verbindung des Schleppstrangs 14 mit dem Rumpf 24 des Schleppkörpers 12 hergestellt, als auch die elektrische Verbindung der in dem Schleppstrang 14 geführten elektrischen Leiter mit den im Zugkabel 13 verlaufenden elektrischen Leitern vorgenommen. Die mechanische Befestigung erfolgt dabei im Zusammenwirken mit einem am Ende des Schleppstrangs 14 angeordneten Befestigungsglied 44 mittels eine Art Bajonettverschluß, während die elektrische Kontaktierung durch eine mehrpolige Steckverbindung vorgenommen ist.

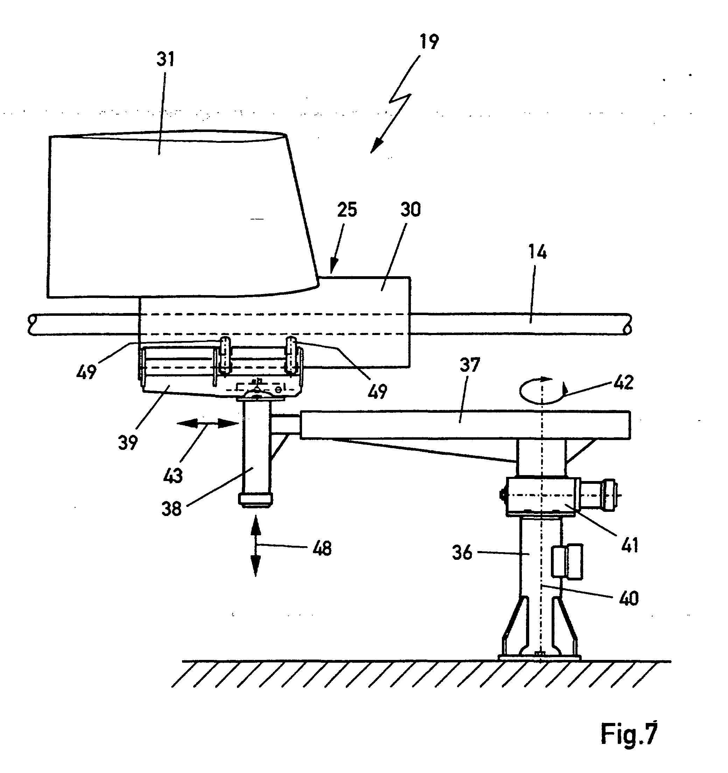

Die bereits angesprochene Haltevorrichtung 19 der Verbringeinrichtung 15 zur Aufnahme des vom Rumpf 24 getrennten Heckteils 25 ist in Fig.7 in Seitenansicht dargestellt. Sie weist eine motorisch drehbare Drehsäule 36 mit einem davon radial wegstrebenden, horizontal ausgerichteten, teleskopierbaren Tragarm 37 auf, an dessen freiem Ende ein teleskopierbarer Hebearm 38 fest angeordnet ist. Der parallel zur Drehsäule 36 ausgerichtete Hebearm 38 trägt an seinem oberen Ende eine um eine vertikale Achse drehbare Aufnahme 39 für das Heckteil 25. Alternativ kann die Aufnahme 39 fest mit dem Hebearm 38 verbunden sein, der dann seinerseits um eine Längsachse drehbar am Tragarm 37 festgelegt ist. Wie nicht weiter dargestellt ist, ist die Aufnahme 39 so konstruiert, daß das Heckteil 25 weitgehend formschlüssig in der Aufnahme 39 einliegt. Mehrere Schnellverschlüsse 49 sichern zusätzlich das Heckteil 25 in der Aufnahme 39 gegen Herausfallen bei schwerem Seegang. Der elektromotorische oder hydraulische Drehantrieb zum Drehen der Drehsäule 36 um ihre Vertikalachse 40 ist in Fig. 7 mit 41 bezeichnet. Die reversible Drehrichtung der Drehsäule 36 ist durch Doppelpfeil 42 symbolisiert. Der teleskopierbare Tragarm 37 kann pneumatisch, hydraulisch oder elektromotorisch in seiner Länge verstellt werden. Die Längsverstellbarkeit des Tragarms 37 ist durch Doppelpfeil 43 symbolisiert. Über den Hebearm 38 kann die Aufnahme 39 vertikal auf- und abwärts bewegt werden. Die Verschiebebewegung der Aufnahme 39 ist durch Doppelpfeil 48 angedeutet. Der teleskopierbare Hebearm 38 kann zur Vertikalverstellung der Aufnahme 39 wiederum pneumatisch, hydraulisch oder elektromotorisch angetrieben sein.

Mit der an Deck 101 des Schleppfahrzeugs 10 installierten Verbringeinrichtung 15 erfolgt die Ausbringung des Sonarsystems wie folgt:

Die Schleppkörper-Versatzvorrichtung 18, die in ihrer Aufnahmeeinheit 21 den Schleppkörper 12 hält, befindet sich in der in Fig.1 strichliniert dargestellten und mit I gekennzeichneten Position. Das Zugkabel 13 ist vollständig auf die Windentrommel 16 aufgewickelt. Das zunächst noch vom Rumpf 24 getrennte Heckteil 25 ist in der Haltevorrichtung 19 aufgenommen und vom Rumpf 24 weggeschwenkt. Der Schleppstrang 14 ist vollständig auf der Windentrommel 17 aufgewickelt. Die Haltevorrichtung 19 ist hinter die Windentrommel 17 so verschwenkt, daß die Heckteilachse etwa mit dem von der Windentrommel 17 ablaufenden Schleppstrang 14 fluchtet. Nunmehr wird der Schleppstrang 14 mit seinem Ende durch die Gleitführung 33 im Heckteil 25 hindurchgesteckt und der Schleppstrang 14 durch Fieren von der Windentrommel 17 ins Wasser ausgebracht, wobei das Heckteil 25 als sogenanntes Fairlead dient und den über die Heckwand 104 auslaufenden Schleppstrang 14 von der Heckkante abhält. Das fahrzeugseitige Ende des Schleppstrangs 14 ist an einer ebenfalls auf der Windentrommel 17 aufgetrommelten Fangleine befestigt, so daß der Schleppstrang 14 am Strangende nicht unkontrolliert durch die Gleitführung 33 im Heckteil 25 hindurchgleiten kann. Ist der Schleppstrang 14 soweit ausgelegt, daß sein fahrzeugseitiges Ende mit dem daran befindlichen Befestigungsglied 44 unmittelbar vor dem Heckteil 25 zu liegen kommt, wird der Ausbringvorgang des Schleppstrangs 14 gestoppt und das Schleppkabel 14 mittels eines hier nicht dargestellten, manuell zu bedienenden Bügels an der Haltevorrichtung 19 festgelegt, so daß der Zug des Schleppkabels 14 von der Haltevorrichtung 19 aufgenommen wird. Das Heckteil 25 wird nunmehr mittels der Haltevorrichtung 19 hinter den in der Versatzvorrichtung 18 gehaltenen Rumpf 24 so geschwenkt, daß das Heckteil 25 etwa mit dem Rumpf 24 fluchtet. Nunmehr wird das am Schleppstrang 14 vorhandene Befestigungsglied 44 in die Befestigungsvorrichtung 29 am Rumpf 24 eingesetzt und darin verriegelt. Die Fangleine wird vom Schleppstrang 14 gelöst und mittels der Haltevorrichtung 19 das Heckteil 25 an die Schnittstelle am Rumpf 24 so angesetzt, daß die beiden Verriegelungsflansche 261,262 der Schnellverriegelung 26 aneinanderliegen. Nunmehr wird der Verschluß- oder Margrafring 47 über die Verriegelungsflansche 261, 262 gesetzt und verspannt.

Nach dem Zusammensetzen des Schleppkörpers 12 wird der Zugentlastungsbügel vom Schleppstrang 14 getrennt und die Haltevorrichtung 19 nach Lösen der Schnellverschlüsse 49 von dem zusammengesetzten Schleppkörper 12 weggeschwenkt. Danach wird die Schleppkörper-Versatzvorrichtung 18 durch Verschieben des Schlittens 183 soweit an die Heckkante des Schleppfahrzeugs 10 verlagert, daß der in der Aufnahmeeinheit 21 gehaltene Schleppkörper 12 über die Heckwand 104 frei auskragt. Diese Position der Versatzvorrichtung 18 mit Schleppkörper 12 ist in Fig. 1 strichpunktiert dargestellt und mit II gekennzeichnet. Nunmehr wird durch Absenken und Austeleskopieren der Schwenkarme 181, 182 der Versatzvorrichtung 18 der Schleppkörper 12 ins Wasser eingesetzt, wobei die Schwenkarme 181, 182 bis knapp unter die Wasseroberfläche reichen. Die Wasseroberfläche ist in Fig.1 schematisch mit 45 angedeutet. Nunmehr wird die Aufnahmeeinheit 21 am Ende der Schwenkarme 181, 182 gelöst, so daß der Schleppkörper 12 aus der Aufnahmeeinheit 21 herausgleitet. Durch Fieren des Zugkabels 13 wird die gewünschte Tauchtiefe des Schleppkörpers 12 mit Schleppstrang 14 eingestellt.

Das Einholen des Sonarsystems erfolgt in umgekehrter Weise, wobei zunächst durch Einschalten der Winde die Windentrommel 16 das Zugkabel 13 soweit aufwickelt, bis der im Wasser verbleibende Zugkabelabschnitt nur noch wenige Meter beträgt. Dann werden die Schwenkarme 181, 182 der Versatzvorrichtung 18 in die in Fig.1 ausgezogen dargestellte Abschwenkposition überführt. Dann wird durch weiteres Aufwickeln des Zugkabels 13 der Schleppkörper 12 soweit an die Versatzvorrichtung 18 herangefahren, bis er mit seinem Aufnahmeglied 46 in die Aufnahmeeinheit 21 einfällt. Nunmehr wird der Schleppkörper 12 mit daran hängendem Schleppstrang 14 in die Position II in Fig. 1 angehoben und anschließend durch Verschieben des Schlittens 183 in die mit I gekennzeichnete Position verfahren. Dann wird die Haltevorrichtung 19 unter das Heckteil 25 geschwenkt, das Heckteil 25 in der Aufnahme 39 der Haltevorrichtung 19 befestigt, der Zugentlastungsbügel auf das Schleppkabel 14 aufgeschwenkt und die Schnellverriegelung 26 gelöst. Danach wird durch Verschieben des Tragarms 37 der Haltevorrichtung 19 das Heckteil 25 vom Rumpf 24 weggeschoben, so daß genügend Montageplatz entsteht, um die auf der Windentrommel 17 aufgewickelte Fangleine mit dem Befestigungsglied 44 am Ende des Schleppstrangs 14 zu verbinden. Durch Einschalten des Drehantriebs 41 für die Drehsäule 36 wird nunmehr das Heckteil 25 seitwärts weg vom Rumpf 24 verschwenkt bis die Heckteilachse in etwa mit der auf der Windentrommel 17 aufgewickelten Fangleine fluchtet. In dieser Position wird die Haltevorrichtung 19 fixiert. Nunmehr wird nach Lösen des Zugentlastungsbügels der motorische Antrieb für die Windentrommel 17 eingeschaltet und der Schleppstrang 14 vollständig auf die Windentrommel 17 aufgewickelt, wobei er durch die Gleitführung 33 im Heckteil 25 einwandfrei und ohne Beschädigungsrisiko geführt ist.

### BEZUGSZEICHENLISTE

| | | | |
|---|---|---|---|
| 10 | Schleppfahrzeug | 101 | Deck |
| 11 | Sendeantenne | 102 | Bordwand |
| 12 | Schleppkörper | 103 | " |
| 13 | Zugkabel | 104 | Heckwand |
| 14 | Schleppstrang (Streamer) | | |
| 15 | Verbringeinrichtung (Handling-System) | | |
| 16 | Windentrommel | | |
| 17 | " | | |
| 18 | Versatzvorrichtung | 181 | Schwenkarm |
| | | 182 | " |
| | | 183 | Schlitten |
| 19 | Haltevorrichtung | | |
| 20 | Laufrolle | | |
| 21 | Aufnahmeeinheit | | |
| 22 | Schienen | | |
| 23 | Hohlkörper | | |
| 24 | Rumpf | | |
| 25 | Heckteil | | |
| 26 | Schnellverriegelung | 261 | Verriegelungsflansch an 30 |
| | | 262 | " an 24 |
| 27 | Befestigungsvorrichtung für Zugkabel 13 | | |
| 28 | Depressor | | |
| 29 | Befestigungsvorrichtung für Schleppstrang 14 | | |
| 30 | Tubus | | |
| 31 | Flügel | | |
| 32 | Montagestumpf | | |
| 33 | Gleitführung | | |
| 34 | zylindrische Bohrung | | |
| 35 | Muffe in 24 (Fig. 6) | | |
| 36 | Drehsäule | | |
| 37 | Tragarm | | |
| 38 | Hebearm | | |
| 39 | Aufnahme | | |
| 40 | Vertikalachse von 36 | | |
| 41 | Drehantrieb | | |
| 42 | Pfeil für Drehung von 36 | | |
| 43 | Pfeil für Längsverschiebung von 37 | | |
| 44 | Befestigungsglied an 14 | | |
| 45 | Wasseroberfläche | | |
| 46 | Aufnahmeglied | | |
| 47 | Verschlußring | | |
| 48 | Pfeil für Vertikalverschiebung vom 39 | | |
| 49 | Schnellverschluß an 39 | | |

## Patentansprüche

1. Schleppkörper für ein im Wasser geschlepptes, einen akustischen Sendeteil mit Sendeantenne und einen akustischen Empfangsteil mit Empfangsantenne aufweisendes Sonarsystem, der als ein mindestens die Sendeantenne (11) umschließender Hohlkörper (23) mit daran befestigten Stabilisatoren (31) ausgebildet ist und eine Befestigungsvorrichtung (27, 29) sowohl für ein Schlepp- oder Zugkabel (13) zu einem Schleppfahrzeug (10) als auch für einen zumindest die Empfangsantenne enthaltenden Schleppstrang (14) aufweist, **dadurch gekennzeichnet, daß** der Hohlkörper (23) in einen zumindest die Sendeantenne (11) enthaltenden, sowie die Befestigungsvorrichtungen (27,29) tragenden Rumpf (24) und in ein die Stabilisatoren (31) tragendes, schwanzartiges Heckteil (25) unterteilt ist und daß das Heckteil (25) mit dem Rumpf (24) lösbar verbunden ist und eine Gleitführung (33) für den Schleppstrang (14) enthält.

2. Schleppkörper nach Anspruch 1, **dadurch gekennzeichnet, daß** das Heckteil (25) in dem in Schlepplage oberen Ende auf der Rückseite des im wesentlichen turmartigen Rumpfs (24) mit zur Rumpfachse etwa rechtwinkliger Heckteilachse angesetzt ist.

3. Schleppkörper nach Anspruch 1 oder 2, **dadurch gekennzeichnet, daß** das Heckteil (25) einen im wesentlichen zylinderförmigen Tubus (30) aufweist, von dem zwei die Stabilisatoren bildende Flügel (31) radial abstehen, und daß die Gleitführung (33) koaxial im Tubus (30) ausgebildet ist.

4. Schleppkörper nach einem der Ansprüche 1 bis 3, **dadurch gekennzeichnet, daß** die Befestigungsvorrichtung (27) für das Schlepp- oder Zugkabel (13) auf der Oberseite des Rumpfs (24) angeordnet ist und daß an dem in Schlepplage unteren Ende des Rumpfs (24) seitlich abstehende Depressoren (28) zur Einstellung der Schlepptiefe angeordnet sind.

5. Schleppkörper nach einem der Ansprüche 1 bis 4, **dadurch gekennzeichnet, daß** die Befestigungsvorrichtung (29) für den Schleppstrang (14) an der Schnittstelle des Rumpfs (24) zum Heckteil (25) ausgebildet ist.

6. Schleppkörper nach einem der Ansprüche 3 bis 5, **dadurch gekennzeichnet, daß** die Gleitführung (33) von einer zylindrischen Bohrung (34) im Tubus (30) gebildet ist, die sich zu beiden Stirnenden des Tubus (30) hin konusförmig erweitert.

7. Schleppkörper nach einem der Ansprüche 1 bis 6, **dadurch gekennzeichnet, daß** das vom Rumpf (24) getrennte Heckteil (25) auf dem Schleppfahrzeug (10) festlegbar ausgebildet ist und eine in seiner Gleitführung (33) den Schleppstrang (14) führende Verbringereinrichtung (15) beim Fieren und Einholen des Schleppstrangs (14) am Schleppfahrzeug (10) ausgebildet ist.

8. Schleppfahrzeuggestützte Verbringeinrichtung zum Ausbringen und Einholen eines im Wasser geschleppten Sonarsystems mit einem Schleppkörper (12) nach einem der Ansprüche 1 bis 7, **gekennzeichnet durch** eine mit teleskopierbaren Schwenkarmen (181, 182) ausgestattete Versatzvorrichtung (18) für den Schleppkörper (12) und eine Haltevorrichtung (19) für das Heckteil (23), die räumlich neben der Versatzvorrichtung (18) angeordnet und so ausgebildet ist, daß das in einer Heckleil- Aufnahme (39) der Haltevorrichtung (19) festgelegte Heckteil (25) vor die Schnittstelle am Rumpf (24) schwenkbar und von der Schnittstelle wegschwenkbar ist.

9. Verbringeinrichtung nach Anspruch 8, **dadurch gekennzeichnet, daß** die Haltevorrichtung (19) eine motorisch drehbare Drehsäule (36) mit einem davon radial wegstrebenden, vorzugsweise teleskopierbaren Tragarm (37) und einen am Tragarmende angeordneten, parallel zur Drehsäule (36) ausgerichteten, vorzugsweise teleskopierbaren Hebearm (38) aufweist, der an seinem oberen Ende die Heckteil-Aufnahme (39) trägt und daß die um eine Vertikalachse drehbar ausgebildete Heckteil-Aufnahme (39) mit mindestens einem Verschluß (49) zum lösbaren Befestigen des Heckteils (25) in der Aufnahme (39) versehen ist.

10. Verbringeinrichtung nach Anspruch 8 oder 9, **gekennzeichnet durch** eine Winde mit einer Windentrommel (16) für das Schlepp- oder Zugkabel (13) und einer Windentrommel (17) für den Schleppstrang (14).

## Claims

1. Towed body for a sonar system which is towed in the water, has an acoustic transmitting part with a transmitting antenna, and an acoustic receiving part with a receiving antenna, is in the form of a hollow body (23), which surrounds at least the transmitting antenna (11) and has stabilizers (31) attached to it, and has an attachment apparatus (27, 29) both for a towing or traction cable (13) to a towing vehicle (10) and for a towed section (14) which contains at least the receiving antenna, **characterized in that** the hollow body (23) is subdivided into a hull (24), which contains at least the transmitting antenna (11) and to which the attachment apparatuses (27, 29) are fitted, and a tail-like rear part (25) to which the stabilizers (31) are fitted, and **in that** the rear part (25) is detachably connected to the hull (24) and contains a sliding guide (33) for the towed section (14).

2. Towed body according to Claim 1, **characterized in that** the rear part (25) is fitted in the upper end (in the towing position) on the rear face of the essentially tower-like hull (24) with the rear part axis approximately at right angles to the hull axis.

3. Towed body according to Claim 1 or 2, **characterized in that** the rear part (25) has an essentially cylindrical tube (30), from which two vanes (31), which form the stabilizers, project radially, and **in that** the sliding guide (33) is formed coaxially in the tube (30).

4. Towed body according to one of Claims 1 to 3, **characterized in that** the attachment apparatus (27) for the towing or traction cable (13) is arranged on the upper face of the hull (24), and **in that** depressors (28), which project at the sides, are arranged at the lower end of the hull (24) in the towing position, in order to set the towing depth.

5. Towed body according to one of Claims 1 to 4, **characterized in that** the attachment apparatus (29) for the towed section (14) is formed at the interface between the hull (24) and the rear part (25).

6. Towed body according to one of Claims 3 to 5, **characterized in that** the sliding guide (33) is formed by a cylindrical hole (34) in the tube (30), which widens conically towards both end faces of the tube (30).

7. Towed body according to one of Claims 1 to 6, **characterized in that** the rear part (25), which is separated from the hull (24), is designed such that it can be fixed on the towing vehicle (10), and a deployment device (15), which guides the towed section (14) in its sliding guide (33), is formed on the towing vehicle (10) for paying out and retrieving the towed section (14).

8. Deployment device, which is supported on a towing vehicle, for deployment and retrieval of a sonar system which is towed in the water, having a towed body (12) according to one of Claims 1 to 7, **characterized by** a stowage apparatus (18), which is equipped with telescopic pivoting arms, for the towed body (12) and a holding apparatus (19) for the rear part (23), which is arranged physically alongside the stowage apparatus (18) and is designed such that the rear part (25), which is fixed in a rear-part holder (39) in the holding apparatus (19), can be pivoted against the hull (24) in front of the interface, and can be pivoted away from the interface.

9. Deployment device according to Claim 8, **characterized in that** the holding apparatus (19) has a rotating column (36), which can be rotated by a motor, having a supporting arm (37), which points radially away from it and is preferably telescopic, and the holding apparatus (19) has a lifting arm (38), which is arranged at the end of the supporting arm, is aligned parallel to the rotating column (36) and is preferably telescopic, with the rear-part holder (39) being fitted to the upper end of the lifting arm (38), and **in that** the rear-part holder (39), which is designed such that it can rotate about a vertical axis, is provided with at least one closure (49) for detachably securing the rear part (25) in the holder (39).

10. Deployment device according to Claim 8 or 9, **characterized by** a winch with a winch drum (16) for the towing or traction cable (13), and a winch drum (17) for the towed section (14).

## Revendications

1. Corps de remorque pour un système de sonar remorqué dans l'eau, qui présente une partie qui forme un émetteur acoustique avec une antenne d'émission et une partie qui forme un récepteur acoustique avec une antenne de réception, lequel corps de remorque est configuré sous la forme d'au moins un corps creux (23) qui entoure l'antenne d'émission (11) et sur lequel sont fixés des stabilisateurs (31) et qui présentent un dispositif de fixation (27, 29) à la fois pour un câble de remorquage ou de traction (13) qui conduit à un navire de remorquage (10) et pour une ligne remorquée (14) qui contient au moins l'antenne de réception, **caractérisé en ce que** le corps creux (23) est divisé en une coque (24) qui contient au moins l'antenne d'émission (11) et qui porte les dispositifs de fixation (27, 29) et en une partie arrière (25) en forme de queue qui porte les stabilisateurs (31), et **en ce que** la partie arrière (25) est reliée de manière libérable à la coque (24) et contient un guide à glissière (33) pour la ligne remorquée (14).

2. Corps de remorque selon la revendication 1, **caractérisé en ce que** la partie arrière (25) est placée à l'extrémité essentiellement en forme de pointe située dans le haut du côté arrière de la coque (24) lorsque celle-ci est en en position de remorquage, l'axe de la partie arrière étant sensiblement perpendiculaire à l'axe de la coque.

3. Corps de remorque selon les revendications 1 ou 2, **caractérisé en ce que** la partie arrière (25) présente un tube (30) de forme essentiellement cylindrique duquel les deux ailes (31) qui forment les stabilisateurs débordent radialement, et **en ce que** le guide à glissière (33) est réalisé coaxialement dans le tube (30).

4. Corps de remorque selon l'une des revendications 1 à 3, **caractérisé en ce que** le dispositif de fixation (27) du câble de remorquage ou de traction (13) est disposé sur le côté supérieur de la coque (24) et **en ce qu'**à l'extrémité de la coque (24) située dans le bas lorsque la coque est en position de remorquage sont disposés des dépresseurs (28) qui débordent latéralement et qui permettent de régler la profondeur de remorquage.

5. Corps de remorque selon l'une des revendications 1 à 4, **caractérisé en ce que** le dispositif de fixation (29) de la ligne remorquée (14) est réalisé sur l'interface entre la coque (24) et la partie arrière (25).

6. Corps de remorque selon l'une des revendications 3 à 5, **caractérisé en ce que** le guide à glissière (33) est formé par un alésage cylindrique (34) ménagé dans le tube (30) et qui s'évase coniquement vers les deux extrémités frontales du tube (30).

7. Corps de remorque selon l'une des revendications 1 à 6, **caractérisé en ce que** la partie arrière (25) séparée de la coque (24) est réalisée de manière à pouvoir être fixée sur le navire de remorquage (10) et **en ce qu'**un dispositif de mise à l'eau (15) qui conduit la ligne remorquée (14) dans son guide à glissière (33) lors de l'enfilage et du passage de la ligne remorquée (14) est réalisé sur le navire remorquage (10).

8. Dispositif de mise à l'eau soutenu par un navire de remorquage, pour la mise à l'eau et la remontée à bord d'un système de sonar remorqué dans l'eau et doté d'un corps de remorque (12) selon l'une des revendications 1 à 7, **caractérisé par** un dispositif (18) de déplacement du corps de remorque (12) doté de bras pivotants télescopiques (181, 182) et d'un dispositif de retenue (19) de la partie arrière (23) qui est disposé dans l'espace situé à côté du dispositif de déplacement (18), qui est configuré de telle sorte que la partie arrière (25) fixée dans un logement (39) de partie arrière du dispositif de retenue (19) peut être basculée en avant de l'interface sur la coque (24) et peut être éloignée de l'interface par basculement.

9. Dispositif de mise à l'eau selon la revendication 8, **caractérisé en ce que** le dispositif de retenue (19) présente une colonne rotative (36) entraînée en rotation par un moteur, avec un bras de support (37) qui en déborde radialement, de préférence télescopique, et un bras de relèvement (38), de préférence télescopique, disposé sur l'extrémité du bras de support et orienté parallèlement à la colonne rotative (36), le bras de relèvement portant à son extrémité supérieure le logement (39) de partie arrière, et **en ce que** le logement (39) de partie arrière configuré de manière à pouvoir tourner autour d'un axe vertical est doté d'au moins une fermeture (49) qui permet la fixation libérable de la partie arrière (25) dans le logement (39).

10. Dispositif de mise à l'eau selon les revendications 8 ou 9, **caractérisé par** un enrouleur doté d'un tambour d'enroulement (16) pour le câble de remorquage ou de traction (13) et d'un tambour d'enroulement (17) pour la ligne remorquée (14).
